(19)

Europäisches
Patentamt
European
Patent Office
Office européen
des brevets

(11) **EP 2 533 434 A1**

(12) **EUROPEAN PATENT APPLICATION**
published in accordance with Art. 153(4) EPC

(43) Date of publication:
**12.12.2012 Bulletin 2012/50**

(21) Application number: **10844621.2**

(22) Date of filing: **01.02.2010**

(51) Int Cl.:
*H04B 10/04* (2006.01)          *H04B 10/06* (2006.01)
*H04B 10/14* (2006.01)          *H04B 10/142* (2006.01)
*H04B 10/152* (2006.01)          *H04B 10/26* (2006.01)
*H04B 10/28* (2006.01)

(86) International application number:
**PCT/JP2010/051335**

(87) International publication number:
**WO 2011/092862 (04.08.2011 Gazette 2011/31)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(71) Applicant: **Sumitomo Osaka Cement Co., Ltd.
Tokyo 102-8465 (JP)**

(72) Inventors:
 • **MURE Masahito
  Tokyo 102-8465 (JP)**
 • **HIGUMA Kaoru
  Tokyo 102-8465 (JP)**
 • **KATAOKA Toshio
  Tokyo 102-8465 (JP)**
 • **MIYAZAKI Norikazu
  Tokyo 102-8465 (JP)**

 • **MIYACHI Masahide
  Tokyo 102-8465 (JP)**
 • **OIKAWA Youichi
  Sapporo-shi
  Hokkaido 060-0061 (JP)**
 • **SHIGA Noriyasu
  Sapporo-shi
  Hokkaido 060-0061 (JP)**
 • **NAGAEDA Hiroshi
  Sapporo-shi
  Hokkaido 060-0061 (JP)**

(74) Representative: **Staudt, Hans-Peter et al
Bittner & Partner
Intellectual Property Division
Donaustrasse 7
85049 Ingolstadt (DE)**

(54) **LIGHT RECEIVER**

(57)     An optical receiver includes interference means 2 for branching the optical signal modulated in a DQPSK manner into two light beams, delaying at least one branched light beam so that two branched light beams have a predetermined phase difference, rotating the polarization plane of at least one branched light beam so that the polarization planes of the two branched light beams are orthogonal to each other, and coupling the two branched light beams, light separation adjusting means 3 to 5 for separating the output light beam from the interference means and adjusting the polarization planes of the separated light beams, and detection means 6 and 6' for detecting light intensities of the separated light beams output from the light separation adjusting means, wherein an I-component signal and a Q-component signal are generated on the basis of detection signals from the detection means.

FIG.1

EP 2 533 434 A1

**Description**

Technical Field

The present invention relates to an optical receiver, and more particularly, to an optical receiver that demodulates an optical signal modulated in a DQPSK manner to a multi-level phase-modulated signal.

Background Art

In next-generation long-distance large-capacity optical communication systems requiring an increase in speed and an increase in capacity with an increase in communication traffic, the introduction of multi-level modulation-demodulation encoding techniques has been studied. A representative example thereof is a differential quadrature phase shift keying (DQPSK) modulation method. In this method, the signal band is narrower than that in a binary intensity modulation (OOK) method, thus it is possible to improve frequency utilization efficiency or to extend a transmission distance, and an increase in sensitivity can be also expected.

In a quadrature phase shift keying (QPSK) modulation method, "$\theta$", "$\theta+\pi/2$", "$\theta+\pi$", and "$\theta+3\pi/2$" are allocated to symbols "00", "01", "11", and "10" constructed by 2-bit data. Here, "$\theta$" is an arbitrary phase. A receiver reproduces transmission data by detecting the phase of a received signal. A DQPSK modulation method is known as means for relatively easily implementing the QPSK modulation method. In the DQPSK modulation method, phase shift amounts ("0", "$\pi/2$", "$\pi$", and "$3\pi/2$") of carrier waves between the value of a previously-transmitted symbol and the value of a subsequently-transmitted symbol are correlated with 2 bits of the transmission information. Accordingly, the receiver can reproduce transmission data by detecting the phase difference between two neighboring symbols.

As disclosed in PTL 1 or PTL 2, two delay interferometers for generating an I (In-phase) signal and a Q (Quadrature) signal are necessary for demodulating an optical signal modulated in a DQPSK manner and it is also necessary to demodulate a phase difference with high precision. However, since the optical path lengths in the delay interferometers vary and the phase is not stable due to the influence of the ambient temperature or the like of the optical receiver, it is difficult to carry out precise demodulation. There is also a problem in that through which interferometer to demodulate which signal component is not known. There is also a problem in that it is necessary to optimally adjust the difference in optical path length until an optical signal is separated and is input to two interferometers or the difference in optical path length in the respective interferometers and the control system thereof is highly complicated.

Citation List

Patent Literature

[PTL 1] JP-A-2006-295603
[PTL 2] JP-A-2007-158852

Summary of Invention

Technical Problem

The invention is made to solve the above-mentioned problems and an object thereof is to provide an optical receiver that demodulates an optical signal modulated in a DQPSK manner to a multi-level phase-modulated signal and that can demodulate the optical signal by the use of a single interferometer.

Solution to Problem

According to a first aspect of the invention, there is provided an optical receiver that demodulates an optical signal modulated in a DQPSK manner to a multi-level phase-modulated signal, including: interference means for branching the optical signal modulated in a DQPSK manner into two light beams, delaying at least one branched light beam so that two branched light beams have a predetermined phase difference, rotating the polarization plane of at least one branched light beam so that the polarization planes of the two branched light beams are orthogonal to each other, and coupling the two branched light beams; light separation adjusting means for separating the output light beam from the interference means and adjusting the polarization planes of the separated light beams; and detection means for detecting light intensities of the separated light beams output from the light separation adjusting means, wherein an I-component signal and a Q-component signal are generated on the basis of detection signals from the detection means.

A second aspect of the invention provides the optical receiver according to the first aspect, wherein the light separation adjusting means includes: light separation means for separating the output light beam from the interference means into four light beams; phase difference giving means for giving a phase difference at 45 degrees or 225 degrees to the polarization planes of two separated light beams among four separated light beams from the separation means and giving a phase difference at 135 degrees or 315 degrees to the polarization planes of the other two separated light beams; a polarizer that has a transmissive polarization plane of 22.5 degrees or 202.5 degrees for one of the two separated light beams to which the phase difference at 45 degrees or 225 degrees has been given and a transmissive polarization plane of 112.5 degrees or 292.5 degrees for the other thereof; and a polarizer that has a transmissive polarization plane of 22.5 degrees or 202.5 degrees for one of the two separated light beams to which the phase difference at 135 degrees or 315 degrees has been given and a transmissive polarization plane of 112.5 degrees or 292.5 degrees for the other thereof.

The angles corresponding to various phase differences or transmissive polarization planes which can be taken by the optical receiver according to the invention are not limited to the numerical values described in each aspect, but include values slightly departing from the described numerical values within the range in which the object of the invention can be achieved.

A third aspect of the invention provides the optical receiver according to the first aspect, wherein the light separation adjusting means includes: light separation means for separating the output light beam from the interference means into two light beams; phase difference giving means for giving phase differences of different angles to the polarization planes of the separated light beams from the light separation means; and splitting means for splitting the respective separated light beams having different polarization planes into two separated light beams having different components of the polarization plane.

A fourth aspect of the invention provides the optical receiver according to the first aspect, wherein the light separation adjusting means includes: light separation means for separating the output light beam from the interference means into two light beams; phase difference giving means for giving a phase difference at a same angle to the polarization planes of the separated light beams from the separation means; and splitting means for splitting the respective separated light beams having the same polarization plane into two separated light beams having different components of the polarization plane.

A fifth aspect of the invention provides the optical receiver according to the first aspect, wherein the light separation adjusting means includes: phase difference giving means for giving a phase difference at a predetermined angle to the polarization plane of the output light beam from the interference means; light separation means for separating the output light beam from the phase difference giving means into two light beams; and splitting means for splitting the respective separated light beams into two separated light beams having different components of the polarization plane.

A sixth aspect of the invention provides the optical receiver according to any one of the first to fifth aspects, wherein polarization adjusting means for adjusting an angle of the polarization plane of the optical wave input to the interference means is disposed on an optical path in front of the interference means.

A seventh aspect of the invention provides the optical receiver according to any one of the first to sixth aspects, wherein the detection means employs a balanced light-receiving element (differential light-receiving element).

An eighth aspect of the invention provides the optical receiver according to any one of the first to seventh aspects, further including: optical path length adjusting means, which is disposed on an optical path of the branched light beam of the interference means, for adjusting an optical path length; and a control circuit controlling the optical path length adjusting means on the basis of a detection signal from the detection means.

Advantageous Effects of Invention

According to the first aspect of the invention, an optical receiver that demodulates an optical signal modulated in a DQPSK manner to a multi-level phase-modulated signal includes interference means for branching the optical signal modulated in a DQPSK manner into two light beams, delaying at least one branched light beam so that two branched light beams have a predetermined phase difference, rotating the polarization plane of at least one branched light beam so that the polarization planes of the two branched light beams are orthogonal to each other, and coupling the two branched light beams, light separation adjusting means for separating the output light beam from the interference means and adjusting the polarization planes of the separated light beams, and detection means for detecting light intensities of the separated light beams output from the light separation adjusting means, and generates an I-component signal and a Q-component signal on the basis of detection signals from the detection means. Accordingly, it is possible to demodulate an I-component signal and a Q-component signal using only one interference means. Since only one interference means is used, it is necessary to adjust only one optical path length in the interference means so as to achieve high-precision demodulation and it is possible to greatly simplify a control system.

According to the second aspect of the invention, the light separation adjusting means includes light separation means for separating the output light beam from the interference means into four light beams, phase difference giving means for giving a phase difference at 45 degrees or 225 degrees to the polarization planes of two separated light beams among four separated light beams from the separation means and giving a phase difference at 135 degrees or 315 degrees to the polarization planes of the other two separated light beams, a polarizer that has a transmissive polarization plane of 22.5 degrees or 202.5 degrees for one of the two separated light beams to which the phase difference at 45 degrees or 225 degrees has been given and a transmissive polarization plane of 112.5 degrees or 292.5 degrees for the other thereof, and a polarizer that has a transmissive polarization plane of 22.5 degrees or 202.5 degrees for one of the two separated light beams to which the phase difference at 135 degrees or 315 degrees has been given and a transmissive polarization plane of 112.5 degrees or 292.5 degrees for the other thereof. Accordingly, it is possible to easily demodulate an I-component signal and a Q-component signal from the output light beam from the single interference means. Since there can be optimal setting such that plural optical waves in each stage have different polarization planes, it is possible to suppress an adverse effect that neighboring polarization planes interfere to degrade signals, and the like.

According to the third aspect of the invention, the light separation adjusting means includes light separation means for separating the output light beam from the interference means into two light beams, phase difference giving means for giving phase differences of different angles to the polarization planes of the separated light beams from the light separation means, and splitting means for splitting the respective separated light beams having different polarization planes into two separated light beams having different components of the polarization plane. Accordingly, it is possible to easily demodulate an I-component signal and a Q-component signal from the output light beam from only one interference means.

According to the fourth aspect of the invention, the light separation adjusting means includes light separation means for separating the output light beam from the interference means into two light beams, phase difference giving means for giving a phase difference at a same angle to the polarization planes of the separated light beams from the separation means, and splitting means for splitting the respective separated light beams having the same polarization plane into two separated light beams having different components of the polarization plane. Accordingly, it is possible to easily demodulate an I-component signal and a Q-component signal from the output light beam from only one interference means.

According to the fifth aspect of the invention, the light separation adjusting means includes phase difference giving means for giving a phase difference at a predetermined angle to the polarization plane of the output light beam from the interference means, light separation means for separating the output light beam from the phase difference giving means into two light beams, and splitting means for splitting the respective separated light beams into two separated light beams having different components of the polarization plane. Accordingly, it is possible to easily demodulate an I-component signal and a Q-component signal from the output light beam from only one interference means.

According to the sixth aspect of the invention, since polarization adjusting means for adjusting an angle of the polarization plane of the optical wave input to the interference means is disposed on an optical path in front of the interference means, it is possible to further accurately adjust the rotation of the polarization planes in the interference means and to further accurately realize the orthogonal relationship between the polarization planes of two branched light beams.

According to the seventh aspect of the invention, since the detection means employs a balanced light-receiving element (differential light-receiving element), it is possible to easily acquire an I-component signal and a Q-component signal from the output signal from the balanced light-receiving element.

According to the eighth aspect of the invention, since the optical receiver further includes optical path length adjusting means, which is disposed on an optical path of the branched light beam of the interference means, for adjusting an optical path length and a control circuit controlling the optical path length adjusting means on the basis of a detection signal from the detection means, it is possible to optimally adjust the optical path length so as to enable high-precision demodulation even when the optical path length in the interference means is changed. Particularly, in the invention, since only one interference means is used, it is necessary to adjust only one optical path length and it is possible to greatly simplify the control circuit.

Brief Description of Drawings

Fig. 1 is a diagram schematically illustrating an optical receiver according to the invention.
Fig. 2 is a table showing polarization states of an optical wave passing through phase difference giving means a1 and a polarizer a2 in Fig. 1.
Fig. 3 is a table showing polarization states of an optical wave passing through phase difference giving means b1 and a polarizer b2 in Fig. 1.

Fig. 4 is a table showing polarization states of an optical wave passing through phase difference giving means c1 and a polarizer c2 in Fig. 1.

Fig. 5 is a table showing polarization states of an optical wave passing through phase difference giving means d1 and a polarizer d2 in Fig. 1.

Fig. 6 is a table showing states of a signal component (I component) of a balanced light-receiving element 6 based on Figs. 2 and 3.

Fig. 7 is a table showing states of a signal component (Q component) of a balanced light-receiving element 6' based on Figs. 4 and 5.

Fig. 8 is a table used to compare the states of an I component and a Q component with a bit phase state of an optical signal based on Figs. 6 and 7.

Fig. 9 is a diagram illustrating a second example of light separation adjusting means.

Fig. 10 is a diagram illustrating a third example of light separation adjusting means.

Fig. 11 is a diagram illustrating the definitions of an ellipse angle ε and a rotation angle A.

Description of Embodiments

Hereinafter, the invention will be described in detail with reference to exemplary embodiments.

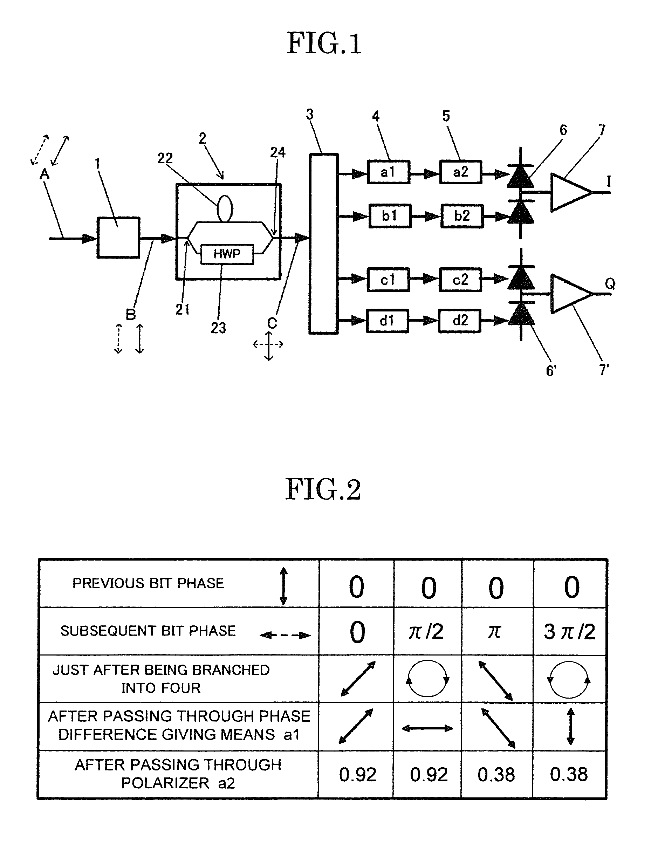

As shown in Fig. 1, the invention provides an optical receiver that demodulates an optical signal A modulated in a DQPSK manner to a multi-level phase-modulated signal, including interference means 2 for branching the optical signal modulated in a DQPSK manner into two light beams, delaying at least one branched light beam so that two branched light beams have a predetermined phase difference, rotating the polarization plane of at least one branched light beam so that the polarization planes of the two branched light beams are orthogonal to each other, and coupling the two branched light beams, light separation adjusting means 3 to 5 for separating the output light beam from the interference means and adjusting the polarization planes of the separated light beams, and detection means 6 and 6' for detecting light intensities of the separated light beams output from the light separation adjusting means, wherein an I (In-phase)-component signal and a Q (Quadrature)-component signal are generated on the basis of the detection signals from the detection means.

The optical receiver according to the invention is characterized in that only one interference means 2 is used as interferometers required for demodulating an I-component signal and a Q-component signal, as shown in Fig. 1. The configuration of the interference means 2 may have any combination of optical elements necessary for performing the following functions:

(1) branching an optical signal modulated in a DQPSK manner into two light beams;
(2) delaying at least one branched light beam so that two branched light beams have a predetermined phase difference;
(3) rotating the polarization plane of at least one branched light beam so that the polarization planes of two branched light beams are orthogonal to each other; and
(4) coupling two branched light beams while maintaining the states of (2) and (3).

In order to perform the functions, as shown in Fig. 1, a delay waveguide 22 is formed in one of the branched waveguides branched at a branching portion 21 and a wavelength plate 23 rotating a polarization plane is formed in the other branched waveguide. An optical coupler 24 coupling the optical waves passing through the delay waveguide 22 and the wavelength plate 23 is provided.

The interference means 2 in the optical receiver according to the invention is not limited to the configuration shown in Fig. 1, but may be configured to finally achieve a predetermined phase difference using two delay waveguides by additionally providing a delay waveguide 22 to the other branched waveguide. The wavelength plate 23 rotating the polarization plane may be additionally provided to the other branched waveguide so as to finally constitute the orthogonal relationship between the polarization planes of two branched light beams using two wavelength plates.

The delay waveguide 22 may be configured as an optical waveguide having a length necessary for delay, or may be configured to cause a relative delay between the branched waveguides by changing the partial refractive index of the optical waveguide to a high refractive index or a low refractive index.

The predetermined phase difference to be delayed is typically set to a phase difference corresponding to 1 bit of a signal to be transmitted.

In general, a half wavelength plate is used as the wavelength plate 23 so as to cause the polarization planes to be orthogonal to each other. The optical receiver according to the invention is not limited to the wavelength plate, but it may be possible to minimize various elements by employing means such as a Faraday rotator for rotating the polarization plane instead of the wavelength plate.

The interference means 2 can employ various methods such as a method of forming the interference means as a spatial optical system using a beam splitter, a mirror, and the like, a method of constructing the interference means as an optical system including an optical waveguide using an optical coupler, an optical fiber, or the like, and a method of constructing the interference means as an integrated optical system on the same substrate using optical waveguides formed on the surfaces of various substrates such as a substrate of lithium niobate or the like having an electro-optical effect. Various optical elements shown in Fig. 1 may be combined into a single optical component.

In Fig. 1, polarization adjusting means (polarization controller) 1 for adjusting the angle of the polarization plane of an optical wave B input to the interference means 2 is disposed on the optical path in front of the interference means 2. Two arrows shown in the upside of reference sign A in Fig. 1 represent the angles of the polarization planes, where the solid arrow represents the polarization plane of the previous bit phase and the dotted arrow represent the polarization plane of a bit phase (subsequent bit phase) subsequent to the previous bit phase.

As shown in Fig. 1, since the polarization plane of the optical wave A input to the optical receiver is arranged in a predetermined direction like the optical wave B by the polarization adjusting means 1 until the polarization plane is input to the interference means 2, it is possible to more accurately adjust the rotation of the polarization plane in the interference means 2 and thus to more accurately achieve the orthogonal relationship between the polarization planes of two branched light beams. Two arrows shown in the downside of reference sign B have the same meaning as reference sign A.

The optical wave (optical signal) B input to the interference means 2 is branched to two light beams, and one branched light beam is delayed from the other branched light beam (the optical wave passing through the half wavelength plate 23) by a phase corresponding to 1 bit through the use of the delay waveguide 22. The polarization plane of the optical wave passing through the half wavelength plate 23 is rotated by 90 degrees. As a result, in the branched light beam coupled in the optical coupler 24, as shown in the downside of reference sign C, the optical wave (the solid arrow) of a previous bit phase passing through the delay waveguide 22 and the optical wave (the dotted arrow) of a subsequent bit phase passing through the wavelength plate 23 with the polarization plane rotated by 90 degrees are superimposed.

In Fig. 1, the light separation adjusting means includes light separation means 3 for separating the output light beam from the interference means into four light beams, phase difference giving means 4 for giving a phase difference at 45 degrees or 225 degrees to the polarization planes of two separated light beams (through the use of a1 and b1) among four separated light beams from the light separation means and giving a phase difference at 135 degrees or 315 degrees to the polarization planes of the other two separated light beams (through the use of c1 and d1), a polarizer 5 that has a transmissive polarization plane of 22.5 degrees or 202.5 degrees for one of two separated light beams to which the phase difference at 45 degrees or 225 degrees has been given (through the use of a2) and a transmissive polarization plane of 112.5 degrees or 292.5 degrees for the other light beam (through the use of b2), and a polarizer 5 that has a transmissive polarization plane of 22.5 degrees or 202.5 degrees for one of two separated light beams to which the phase difference at 135 degrees or 315 degrees has been given (through the use of c2) and a transmissive polarization plane of 112.5 degrees or 292.5 degrees for the other light beam (through the use of d2). Accordingly, it is possible to easily demodulate an I-component signal and a Q-component signal from the output light beam from the single interference means. Since plural optical waves in each stage can be optimally set to have different polarization planes, it is possible to suppress an adverse effect that neighboring polarization planes interfere to degrade signals, and the like.

The coupled light beam C is separated into four separated light beams by the light separation means 3. The light separation means 3 can be constructed by combining beam splitters, optical couplers, and branched waveguides formed on the surface of a substrate such as a substrate having an electro-optical effect. Here, since the polarization plane states of the separated light beams from the light separation means 3 are accurately controlled by the phase difference giving means 4, the polarizer 5, or the like, it is necessary to construct the light separation means 3 using an optical system having a structure maintaining a polarization plane in a constant state.

The four separated light beams are input to the phase difference giving means 4, and a phase difference at 45 degrees or 225 degrees is given to the polarization planes of two separated light beams thereof by the phase difference giving means a1 and b1. a1 and b1 may give phase differences of the same angle or may give phase differences of different angles (the same is true of a predetermined angle to be set by another phase difference giving means or another polarizer). A phase difference at 135 degrees or 315 degrees is given to the polarization planes of the other two separated light beams by the phase difference giving means c1 and d1. The angles of the phase differences are not particularly limited, but it is preferable that the optical waves (two separated light beams) corresponding to an I-component signal and the optical waves (two separated light beams) corresponding to a Q-component signal be set to cause the polarization planes of the optical waves, to which the phase difference is given by the phase difference giving means, to be orthogonal to each other. Accordingly, it is possible to suppress an adverse effect that neighboring polarization planes interfere to degrade signals, and the like and to more efficiently extract necessary components from an optical signal.

Specifically, the phase difference giving means a1 and b1 rotate the polarization planes by any one of 45 degrees and 225 degrees as a predetermined angle. The phase difference giving means c1 and d1 rotate the polarization planes by any one of 135 degrees and 315 degrees as the angle of a phase difference. For example, a quarter wavelength plate can be used as the phase difference giving means.

When the phase difference giving means a1 and b1 (or c1 and d1) rotate the polarization planes by the same angle, the two phase difference giving means may be formed of a single wavelength plate. The light separation means 3 separates an optical wave into four separated light beams, but the optical wave may be separated into two separated light beams and each thereof may be separated into two separated light beams after it passes through the phase difference giving means.

The separated light beam of which the polarization plane is rotated a predetermined angle by the phase difference giving means passes through two polarizers 5 having different transmissive polarization planes. The separated light beams corresponding to the transmissive polarization planes are extracted by the polarizers 5. The angle formed by the transmissive polarization planes of the two polarizers a2 and b2 (or c2 or d2) is preferably set to 90 degrees so as to accurately grasp vector components of the separated light beams, but the invention is not limited to this configuration.

Regarding the angles of the transmissive planes of the polarizers, the polarizers a2 and c2 can be set to 22.5 degrees or 202.5 degrees and the polarizers b2 and d2 can be set to 112.5 degrees or 292.5 degrees. The angles corresponding to various phase differences or the transmissive polarization planes, which can be taken by the optical receiver according to the invention are not limited to the above-mentioned numerical values, but values slightly departing from the numerical values within the range in which the object of the invention can be achieved can be selected.

The optical waves output from the polarizers 5 are input to the light-receiving elements 6 and 6' to detect the optical intensity and the detection signals are amplified by amplifiers 7 and 7' if necessary. The light-receiving elements may be independently provided to correspond to the respective polarizers a2 to d2 and the detection signals of the light-receiving elements may be appropriately compared to distinguish the signal components, but the circuit distinguishing the signal components may be skipped by using a balanced (differential) light-receiving element as shown in Fig. 1.

When a1 and b1 which are the phase difference giving means 4 rotate the polarization planes by 45 degrees (or 225 degrees) and a2 and b2 which are the polarizers 5 are provided with the transmissive polarization planes of 22.5 degrees (or 202.5 degrees) and 112. 5 degrees (or 292.5 degrees), the signal output from the balanced light-receiving element 6 is an I-component signal. When c1 and d1 which are the phase difference giving means 4 rotate the polarization planes by 135 degrees (or 315 degrees (-45 degrees)) and c2 and d2 which are the polarizers 5 are provided with the transmissive polarization planes of 22. 5 degrees (or 202.5 degrees) and 112.5 degrees (or 292. 5 degrees), the signal output from the balanced light-receiving element 6' is a Q-component signal.

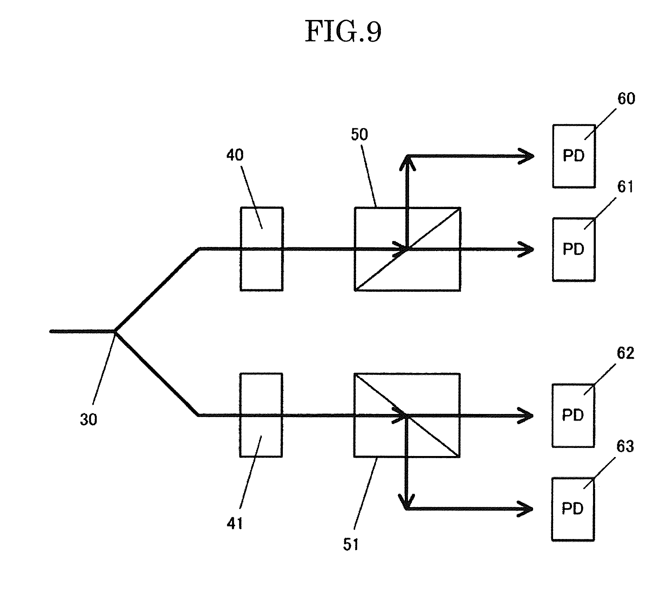

Another example of the light separation adjusting means will be described below.
The light separation adjusting means shown in Fig. 9 includes light separation means 30 for separating the output light beam from the interference means into two light beams, phase difference giving means 40 and 41 for giving phase differences of different angles to the polarization planes of the separated light beams from the light separation means, and splitting means 50 and 51 for splitting the respective separated light beams having different polarization planes into two separated light beams having different components of the polarization plane. Four light beams output from the splitting means are input to the light-receiving elements 60 and 61 and detection signals corresponding to the optical intensities of the optical waves are output therefrom.

The phase difference giving means 40 and 41 can employ a quart wavelength plate, 45 degrees or 225 degrees can be selected as the angle associated with the phase difference in the phase difference giving means 40, and 135 degrees or 315 degrees is selected as the angle associated with the phase difference in the other phase difference giving means 41.

The splitting means 50 and 51 can employ a polarizing beam splitter (PBS) and any of 22.5 degrees and 202.5 degrees can be selected as the polarization angle.

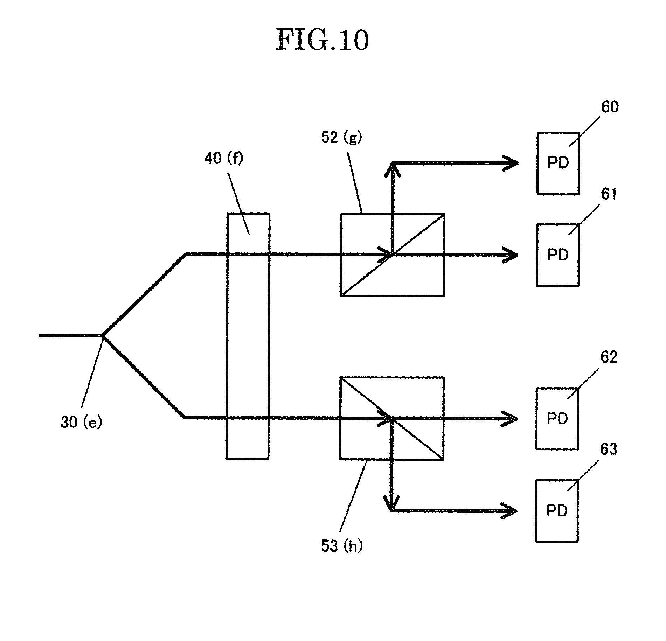

The light separation adjusting means shown in Fig. 10 includes light separation means 30 for separating the output light beam from the interference means into two light beams, phase difference giving means 40 for giving phase differences of a same angle to the polarization planes of the separated light beams from the light separation means, and splitting means 52 and 53 for splitting the respective separated light beams having the same polarization plane into two separated light beams having different components of the polarization plane.

In Fig. 10, the light separation means (e) and the phase difference giving means (f) may be reversed and phase difference giving means for giving a phase difference at a predetermined angle to the polarization plane of the output light beam from the interference means, light separation means for separating the output beams from the phase difference giving means into two light beams, and splitting means for splitting the respective separated light beams into two separated light beams having different components of the polarization plane may be arranged in this order.

As shown in Table 1, various values can be selected as the angle of the polarized wave and the main axis in the phase difference giving means (f) and the splitting means (g) and (h). As a result, the phase difference giving means (f) can select 45 degrees, 135 degrees, 225 degrees, or 315 degrees, the splitting means (g) can select 90±22.5 degrees, 180±22.5 degrees, 270±22.5 degrees, or 360±22.5 degrees, and the splitting means (h) can select 22.5 degrees, 112.5 degrees, 202.5 degrees, or 292.5 degrees.

Table 1

| Selected case | Phase difference giving means f | Splitting means g | Splitting means h |
|---|---|---|---|
| 1 | 45 | 90±22.5 | 22.5 |
| 2 | 45 | 180±22.5 | 112.5 |
| 3 | 45 | 270±22.5 | 202.5 |
| 4 | 45 | 360±±22.5 | 292.5 |
| 5 | 135 | 90±22.5 | 22.5 |
| 6 | 135 | 180±22.5 | 112.5 |
| 7 | 135 | 270±22.5 | 202.5 |
| 8 | 135 | 360±22.5 | 292.5 |
| 9 | 225 | 90±22.5 | 22.5 |
| 10 | 225 | 180±22.5 | 112.5 |
| 11 | 225 | 270±22.5 | 202.5 |
| 12 | 225 | 360±22.5 | 292.5 |
| 13 | 315 | 90±22.5 | 22.5 |
| 14 | 315 | 180±22.5 | 112.5 |
| 15 | 315 | 270±22.5 | 202.5 |
| 16 | 315 | 360±22.5 | 292.5 |

Here, the received power of the light-receiving element is theoretically calculated. When the phase difference giving means is constructed by a ±45° 1/4λ wavelength plate, the Stokes matrix thereof is expressed by Expression 1 with a polarizer rotation angle as φ.
Expression 1

$$\frac{1}{\sqrt{2}}\begin{pmatrix} \cos\phi & -\sin\phi \\ \sin\phi & \cos\phi \end{pmatrix} \frac{1}{\sqrt{2}}\begin{pmatrix} 1-j & 0 \\ 0 & 1+j \end{pmatrix} \frac{1}{\sqrt{2}}\begin{pmatrix} \cos\phi & \sin\phi \\ -\sin\phi & \cos\phi \end{pmatrix} = \frac{1}{\sqrt{2}}\begin{pmatrix} 1 & \mp j \\ \mp j & 1 \end{pmatrix}$$

$$\cdots\cdots(1)$$

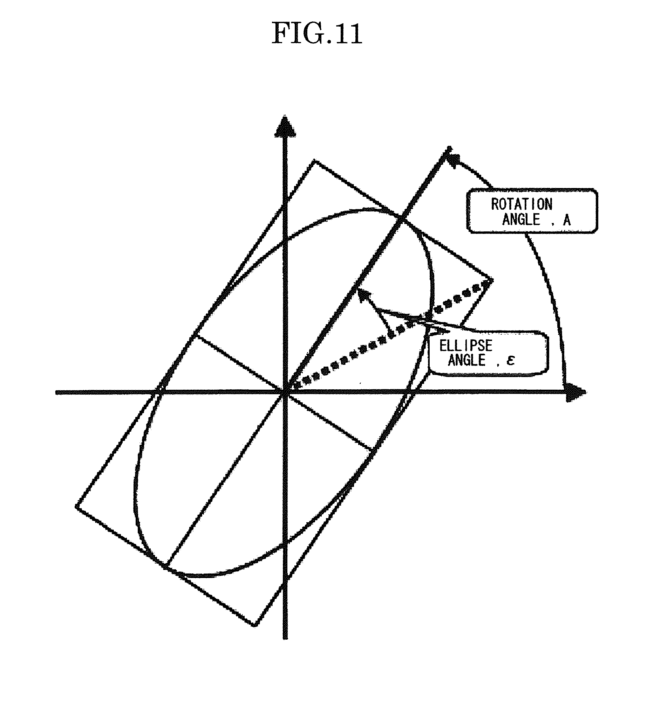

The Stokes matrix of an inclined analyzer is expressed by Expression 2, and a general elliptically-polarized light beam is expressed as a vector by Expression 3. Here, ε represents an ellipse angle, and A represents a rotational angle which is expressed by the definition shown in Fig. 11.
Expression 2

$$\begin{pmatrix} \cos\phi & -\sin\phi \\ \sin\phi & \cos\phi \end{pmatrix} \begin{pmatrix} 1 & 0 \\ 0 & 0 \end{pmatrix} \frac{1}{\sqrt{2}}\begin{pmatrix} \cos\phi & \sin\phi \\ -\sin\phi & \cos\phi \end{pmatrix} = \begin{pmatrix} \cos^2\phi & \cos\phi*\sin\phi \\ \cos\phi*\sin\phi & \sin^2\phi \end{pmatrix}$$

$$\cdots\cdots(2)$$

Expression 3

$$\begin{pmatrix} \cos\varepsilon * \cos A + j * \sin\varepsilon * \sin A \\ \cos\varepsilon * \sin A - j * \sin\varepsilon * \cos A \end{pmatrix} \quad \cdots\cdots(3)$$

The power received by the light-receiving elements 60 and 61 is expressed by Expression 4 using these expressions and the power received by the light-receiving elements 62 and 63 is similarly expressed by Expression 5.
Expression 4

$$|Et|^2 = |Eoy|^2 + |Eox|^2 = 0.5 * ( 1 - \sin 2\varepsilon * \cos 2\phi + \sin 2\phi * \sin 2A * \cos 2\varepsilon )$$

$$\cdots\cdots(4)$$

Expression 5

$$|Et|^2 = |Eoy|^2 + |Eox|^2 = 0.5 * ( 1 + \sin 2\varepsilon * \cos 2\phi + \sin 2\phi * \sin 2A * \cos 2\varepsilon )$$

$$\cdots\cdots(5)$$

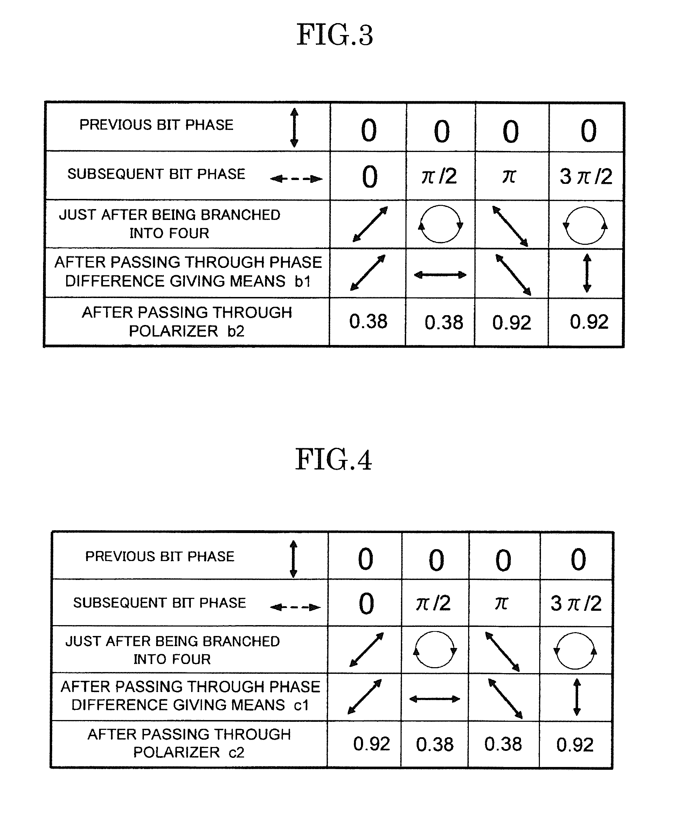

The state variation of optical waves passing through the optical elements in Fig. 1, the relative output values detected by the light-receiving elements, and the logic determination result in the balanced light-receiving element are shown in Figs. 2 to 8.
In Figs. 2 to 5, the previous bit phases (solid arrow) are all set to 0, four states of 0, $\pi/2$, $\pi$, and $3\pi/2$ are selected as the subsequent bit phase (dotted arrow), and the light separation state (see "JUST AFTER BEING BRANCHED INTO FOUR") just after an optical wave is separated by the light separation means 3, the light separation state (see "AFTER PASSING THROUGH PHASE DIFFERENCE GIVING MEANS") of the optical wave passing through the phase difference giving means (a1 to d1), and the amplitude value (see "AFTER PASSING THROUGH POLARIZER a2") of the optical wave passing through the polarizers (a2 to d2) are shown. For example, "AFTER PASSING THROUGH POLARIZER a2" corresponds to $\varepsilon=0°$ and $A=45°$, which are substituted for the above-mentioned expressions, whereby 0.92 is obtained. In this way, the input amplitudes shown in Fig. 2 are obtained.

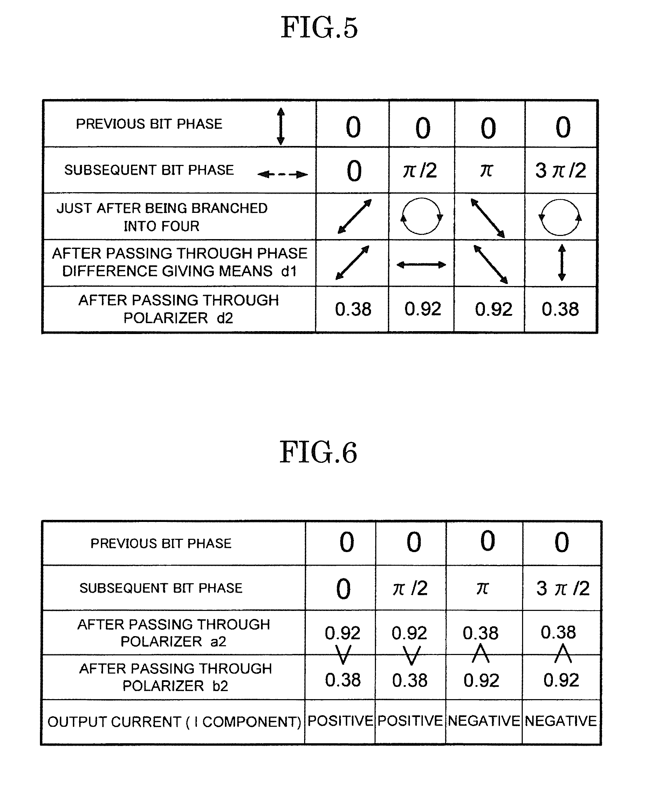

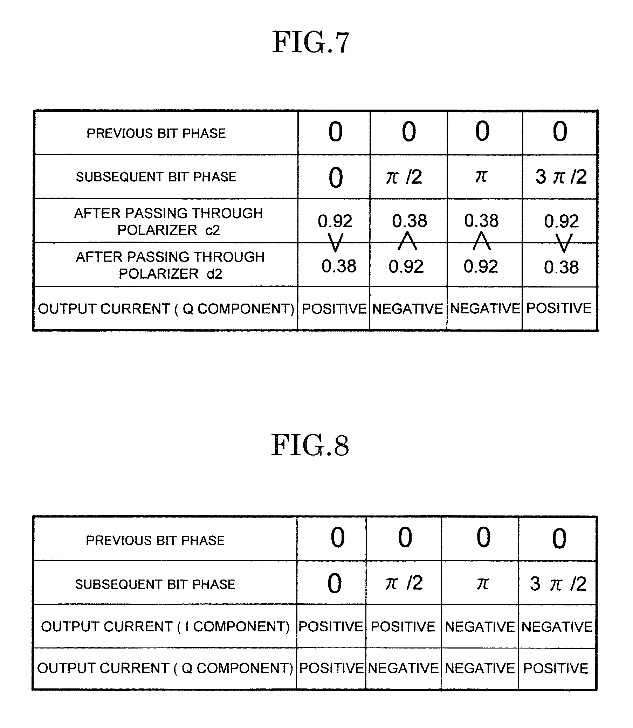

Fig. 6 (Fig. 7) shows detection signals (see "OUTPUT CURRENT") output as an I component (Q component) when the optical waves passing through the polarizers a2 and b2 (c2 and d2) are input to the balanced light-receiving element 6 (6'). The inequalities between "AFTER PASSING THROUGH POLARIZER a2" and "AFTER PASSING THROUGH POLARIZER b2" represent the magnitude relationship between both output currents. Fig. 8 shows a variation in signal state of the I component and the Q component corresponding to the variation in signal state between the previous bit phase and the subsequent bit phase on the basis of Figs. 6 and 7. Accordingly, it can be easily understood that the I component and the Q component are accurately demodulated in the DQPSK modulation.
In the optical receiver according to the invention, optical path length adjusting means (not shown) for adjusting an optical path length may be disposed in an optical path of the branched light beams of the interference means 2. The optical path length adjusting means can employ means for intentionally changing the temperature of a substrate or means for disposing an optical waveguide in a substrate having an electro-optical effect and varying the intensity of an electric field applied to the optical waveguide.

A control circuit (not shown) controlling the optical path length adjusting means on the basis of the detection signals from the detection means shown in Fig. 1, for example, the balanced light-receiving elements 6 and 6' or the light-receiving elements disposed individually to correspond to the polarizers. Specifically, various methods such as a method of controlling the optical path length adjusting means to maximize or minimize the individual values of the detection signals when an optical signal is in a predetermined state can be employed.

By employing the above-mentioned configuration, even when the optical path length in the interference means varies due to the influence of the ambient temperature of the optical receiver or the like, it is possible to adjust the optical path length to the optimum value so as to allow high-precision demodulation. Particularly, in the invention, since the number of interference means is one, the adjustment of the optical path length can be carried out at one position and it is thus possible to simplify the control circuit.

Industrial Applicability

As described above, according to the invention, it is possible to provide an optical receiver that demodulates an optical signal modulated in a DQPSK manner to a multi-level phase-modulated signal and that can carry out the demodulation using a single interferometer.

Reference Signs List

    1: POLARIZATION ADJUSTING MEANS
    2: INTERFERENCE MEANS
    3, 30: LIGHT SEPARATION MEANS
    4, 40, 41: PHASE DIFFERENCE GIVING MEANS
    5: POLARIZER
    6, 6': BALANCED LIGHT-RECEIVING ELEMENT
    7, 7': AMPLIFIER
    21: BRANCHING PORTION
    22: DELAY WAVEGUIDE
    23: WAVELENGTH PLATE
    24: OPTICAL COUPLER
    50~53: SPLITTING MEANS (POLARIZED BEAM SPLITTER)
    60~63: LIGHT-RECEIVING ELEMENT

**Claims**

1.  An optical receiver that demodulates an optical signal modulated in a DQPSK manner to -a multi-level phase-modulated signal, comprising:

    interference means for branching the optical signal modulated in a DQPSK manner into two light beams, delaying at least one branched light beam so that two branched light beams have a predetermined phase difference, rotating the polarization plane of at least one branched light beam so that the polarization planes of the two branched light beams are orthogonal to each other, and coupling the two branched light beams;
    light separation adjusting means for separating the output light beam from the interference means and adjusting the polarization planes of the separated light beams; and
    detection means for detecting light intensities of the separated light beams output from the separation adjusting means,
    wherein an I-component signal and a Q-component signal are generated on the basis of detection signals from the light detection means.

2.  The optical receiver according to claim 1, wherein the light separation adjusting means includes:

    light separation means for separating the output light beam from the interference means into four light beams;
    phase difference giving means for giving a phase difference at 45 degrees or 225 degrees to the polarization planes of two separated light beams among four separated light beams from the separation means and giving a phase difference at 135 degrees or 315 degrees to the polarization planes of the other two separated light beams;
a polarizer that has a transmissive polarization plane of 22.5 degrees or 202.5 degrees for one of the two separated light beams to which the phase difference at 45 degrees or 225 degrees has been given and a transmissive polarization plane of 112.5 degrees or 292.5 degrees for the other thereof; and
a polarizer that has a transmissive polarization plane of 22.5 degrees or 202.5 degrees for one of the two separated light beams to which the phase difference at 135 degrees or 315 degrees has been given and a transmissive polarization plane of 112.5 degrees or 292.5 degrees for the other thereof.

3. The optical receiver according to claim 1, wherein the light separation adjusting means includes:

light separation means for separating the output light beam from the interference means into two light beams;
phase difference giving means for giving phase differences at different angles to the polarization planes of the separated light beams from the light separation means; and
splitting means for splitting the respective separated light beams having different polarization planes into two separated light beams having different components of the polarization plane.

4. The optical receiver according to claim 1, wherein the light separation adjusting means includes:

light separation means for separating the output light beam from the interference means into two light beams;
phase difference giving means for giving a phase difference at a same angle to the polarization planes of the separated light beams from the separation means; and
splitting means for splitting the respective separated light beams having the same polarization plane into two separated light beams having different components of the polarization plane.

5. The optical receiver according to claim 1, wherein the light separation adjusting means includes:

phase difference giving means for giving a phase difference at a predetermined angle to the polarization plane of the output light beam from the interference means;
light separation means for separating the output light beam from the phase difference giving means into two light beams; and
splitting means for splitting the respective separated light beams into two separated light beams having different components of the polarization plane.

6. The optical receiver according to any one of claims 1 to 5, wherein polarization adjusting means for adjusting an angle of the polarization plane of the optical wave input to the interference means is disposed on an optical path in front of the interference means.

7. The optical receiver according to any one of claims 1 to 6, wherein the detection means employs a balanced light-receiving element.

8. The optical receiver according to any one of claims 1 to 7, further comprising:

optical path length adjusting means, which is disposed on an optical path of the branched light beam of the interference means, for adjusting an optical path length; and
a control circuit controlling the optical path length adjusting means on the basis of a detection signal from the detection means.

# FIG.1

# FIG.2

| PREVIOUS BIT PHASE ↕ | 0 | 0 | 0 | 0 |
|---|---|---|---|---|
| SUBSEQUENT BIT PHASE ◄- -► | 0 | $\pi/2$ | $\pi$ | $3\pi/2$ |
| JUST AFTER BEING BRANCHED INTO FOUR | | | | |
| AFTER PASSING THROUGH PHASE DIFFERENCE GIVING MEANS a1 | | | | |
| AFTER PASSING THROUGH POLARIZER a2 | 0.92 | 0.92 | 0.38 | 0.38 |

# FIG.3

| PREVIOUS BIT PHASE ↕ | 0 | 0 | 0 | 0 |
|---|---|---|---|---|
| SUBSEQUENT BIT PHASE ◄--► | 0 | $\pi/2$ | $\pi$ | $3\pi/2$ |
| JUST AFTER BEING BRANCHED INTO FOUR | ↗ | ⟳ | ↖↘ | ⟳ |
| AFTER PASSING THROUGH PHASE DIFFERENCE GIVING MEANS b1 | ↗ | ↔ | ↖↘ | ↕ |
| AFTER PASSING THROUGH POLARIZER b2 | 0.38 | 0.38 | 0.92 | 0.92 |

# FIG.4

| PREVIOUS BIT PHASE ↕ | 0 | 0 | 0 | 0 |
|---|---|---|---|---|
| SUBSEQUENT BIT PHASE ◄--► | 0 | $\pi/2$ | $\pi$ | $3\pi/2$ |
| JUST AFTER BEING BRANCHED INTO FOUR | ↗ | ⟳ | ↖↘ | ⟳ |
| AFTER PASSING THROUGH PHASE DIFFERENCE GIVING MEANS c1 | ↗ | ↔ | ↖↘ | ↕ |
| AFTER PASSING THROUGH POLARIZER c2 | 0.92 | 0.38 | 0.38 | 0.92 |

# FIG.5

| PREVIOUS BIT PHASE ↕ | 0 | 0 | 0 | 0 |
|---|---|---|---|---|
| SUBSEQUENT BIT PHASE ←--→ | 0 | $\pi/2$ | $\pi$ | $3\pi/2$ |
| JUST AFTER BEING BRANCHED INTO FOUR | ⤢ | ◯ | ⤡ | ◯ |
| AFTER PASSING THROUGH PHASE DIFFERENCE GIVING MEANS d1 | ⤢ | ↔ | ⤡ | ↕ |
| AFTER PASSING THROUGH POLARIZER d2 | 0.38 | 0.92 | 0.92 | 0.38 |

# FIG.6

| PREVIOUS BIT PHASE | 0 | 0 | 0 | 0 |
|---|---|---|---|---|
| SUBSEQUENT BIT PHASE | 0 | $\pi/2$ | $\pi$ | $3\pi/2$ |
| AFTER PASSING THROUGH POLARIZER a2 | 0.92 | 0.92 | 0.38 | 0.38 |
| AFTER PASSING THROUGH POLARIZER b2 | 0.38 | 0.38 | 0.92 | 0.92 |
| OUTPUT CURRENT ( I COMPONENT) | POSITIVE | POSITIVE | NEGATIVE | NEGATIVE |

# FIG.7

| PREVIOUS BIT PHASE | 0 | 0 | 0 | 0 |
|---|---|---|---|---|
| SUBSEQUENT BIT PHASE | 0 | $\pi/2$ | $\pi$ | $3\pi/2$ |
| AFTER PASSING THROUGH POLARIZER c2 | 0.92 ∨ | 0.38 ∧ | 0.38 ∧ | 0.92 ∨ |
| AFTER PASSING THROUGH POLARIZER d2 | 0.38 | 0.92 | 0.92 | 0.38 |
| OUTPUT CURRENT ( Q COMPONENT) | POSITIVE | NEGATIVE | NEGATIVE | POSITIVE |

# FIG.8

| PREVIOUS BIT PHASE | 0 | 0 | 0 | 0 |
|---|---|---|---|---|
| SUBSEQUENT BIT PHASE | 0 | $\pi/2$ | $\pi$ | $3\pi/2$ |
| OUTPUT CURRENT ( I COMPONENT) | POSITIVE | POSITIVE | NEGATIVE | NEGATIVE |
| OUTPUT CURRENT ( Q COMPONENT) | POSITIVE | NEGATIVE | NEGATIVE | POSITIVE |

# FIG.9

# FIG.10

# FIG.11

ROTATION
ANGLE , A

ELLIPSE
ANGLE , ε

## INTERNATIONAL SEARCH REPORT

| | International application No. |
|---|---|
| | PCT/JP2010/051335 |

**A. CLASSIFICATION OF SUBJECT MATTER**
*H04B10/04*(2006.01)i, *H04B10/06*(2006.01)i, *H04B10/14*(2006.01)i, *H04B10/142*(2006.01)i, *H04B10/152*(2006.01)i, *H04B10/26*(2006.01)i, *H04B10/28*(2006.01)i

According to International Patent Classification (IPC) or to both national classification and IPC

**B. FIELDS SEARCHED**

Minimum documentation searched (classification system followed by classification symbols)
H04B10/04, H04B10/06, H04B10/14, H04B10/142, H04B10/152, H04B10/26, H04B10/28

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-284104 A (Nippon Telegraph And Telephone Corp.), 03 December 2009 (03.12.2009), entire text; all drawings (Family: none) | 1-8 |
| A | JP 2009-118250 A (Fujitsu Ltd.), 28 May 2009 (28.05.2009), entire text; all drawings & US 2009/116844 A1 | 1-8 |
| A | JP 2009-94744 A (Nippon Telegraph And Telephone Corp.), 30 April 2009 (30.04.2009), entire text; all drawings (Family: none) | 1-8 |

☐ Further documents are listed in the continuation of Box C.　　☐ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 08 April, 2010 (08.04.10) | 20 April, 2010 (20.04.10) |

| Name and mailing address of the ISA/ <br> Japanese Patent Office | Authorized officer |
|---|---|
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006295603 A
- JP 2007158852 A